# EUROPÄISCHE PATENTSCHRIFT

(11) **EP 1 674 757 B1**
(45) Veröffentlichungstag und Bekanntmachung des Hinweises auf die Patenterteilung: **14.04.2010**
(21) Anmeldenummer: 05026048.8
(22) Anmeldetag: 30.11.2005
(51) Int. Cl.: F16F 1/38, F16F 1/393

(54) **Elastisches Lager mit einer Elastomermetallbuchse für ein Kraftfahrzeug**
Elastic support with an elastomeric and metallic buch for a vehicle
Support élastique avec un manchon élastomère/métal pour un véhicule

(30) Priorität: 27.12.2004 DE 102004062807
(43) Veröffentlichungstag der Anmeldung: 28.06.2006
(73) Patentinhaber: Jörn GmbH, 71336 Waiblingen (DE)
(72) Erfinder: Seck, Gerhard, 73630 Remshalden (DE); Mauz, Uwe, 73730 Esslingen (DE); Zawadzki, Bernd, 71409 Schwaikheim (DE)
(74) Vertreter: Liebl, Thomas

(56) Entgegenhaltungen:
- EP-A- 1 191 248
- WO-A-95/23725
- DE-A1- 2 816 742
- DE-C1- 19 913 777
- US-A- 2 126 707
- US-A- 2 482 488
- PATENT ABSTRACTS OF JAPAN Bd. 1998, Nr. 13, 30. November 1998 (1998-11-30) & JP 10 205561 A (TOYODA GOSEI CO LTD), 4. August 1998 (1998-08-04)

## Beschreibung

Die Erfindung betrifft ein elastisches Lager mit einer Elastomermetallbuchse für ein Kraftfahrzeug nach dem Oberbegriff des Anspruchs 1.

Ein gattungsgemäßes elastisches Lager mit einer Elastomermetallbuchse für ein Kraftfahrzeug ist aus der EP-A-1 191 248 bekannt mit einem Aufnahmeauge als erstem Lageranschluss und mit einer Elastomermetallbuchse. Diese besteht aus einem Innenmetallteil als zweitem Lageranschluss mit darauf festhaftend durch jeweils radial gegenüberliegende Freiräume unterbrochenen Elastomerschichtschalen. Dabei weist der Außendurchmesser der Elastomermetallbuchse im Herstellzustand zumindest an den Elastomerschichtbereichen ein Übermaß gegenüber dem zugeordneten Innendurchmesser des Aufnahmeauges auf und die Elastomermetallbuchse ist im montierten Zustand unter Vorspannung in den Elastomerschichtschalen ins Aufnahmeauge eingepresst. In Richtung der gegenüberliegenden Freiräume ist ein freier Federweg gebildet.

Weiter weist das Aufnahmeauges im Querschnitt etwa eine Ellipsenform auf, wobei die Elastomerschichtschalen jeweils im Bereich der engeren Ellipsenbögen entsprechend der Richtung der langen Ellipsenachse angeordnet sind und die dazwischen liegenden Freiräume jeweils im Bereich der flachen Ellipsenbögen entsprechend der Richtung der kurzen Ellipsenachse liegen.

Mit dieser Lagerform können gegenüber einem allgemein bekannten Lager mit zylindrischem Aufnahmeauge die Lagerausdehnung und damit der erforderliche Einbauraum in Richtung der freien Federwege reduziert werden. Die möglichen freien Federwege vom Innenmetallteil zu einer Anschlagfläche bei einer zylindrischen Ausbildung des Aufnahmeauges sind zwar größer, werden aber in konkreten Fällen regelmäßig nicht benötigt und ausgenützt, sondern durch voluminöse elastische Anschlagpuffer auf dem Innenmetallteil für die erforderliche Funktion stark begrenzt. Durch die Ellipsenform des Aufnahmeauges wird regelmäßig ein geeigneter Federweg in Verbindung mit einer Verdrehsicherung zwischen dem Aufnahmeauge und der eingepressten Elastomermetallbuchse zur Verfügung gestellt.

Aufgabe der Erfindung ist es ein gattungsgemäßes elastisches Lager so weiterzubilden, dass für konkrete Einsatzfälle die Lagerfunktion, insbesondere die Federkonstante in den unterschiedlichen Federrichtungen durch weitere Ausgestaltungen gut anpassbar und optimierbar ist.

Diese Aufgabe wird mit den Merkmalen des Anspruchs 1 gelöst.

Gemäß Anspruch 1 soll nicht nur das Aufnahmeauge im Querschnitt eine Ellipsenform aufweisen, sondern auch das Innenmetallteil, wobei jedoch die Ellipsenstellungen um etwa 90° verdreht sind, so dass die lange Ellipsenachse der Innenmetallteil-Ellipsenform etwa im rechten Winkel zur langen Ellipsenachse der Aufnahmeauge-Ellipsenform liegt. Zudem sollen die engeren Ellipsenbögen der Aufnahmeauge-Ellipsenform enger sein, als die jeweils radial gegenüberliegenden flachen Ellipsenbögen der Innenmetallteil-Ellipsenform. Zudem sind die engeren Ellipsenbögen der Innenmetallteil-Ellipsenform nicht ganz ausgeformt, sondern im Bereich der Freiräume zwischen den Elastomerschichtschalen abgeflacht, um einen geeigneten freien Federweg zu erhalten. An diesen Abflachungen sind elastische Radialanschläge angebracht. Durch diese Form des Innenmetallteils in Verbindung mit der Form des Aufnahmeauges und der Elastomerschichtschalen wird in den unterschiedlichen Federrichtungen eine gut angepasste Lagerfunktion erhalten.

Als Elastomermetallbuchse kann in an sich bekannter Weise eine Gummimetallbuchse verwendet werden, wobei die festhaftenden Verbindungen durch Vulkanisation hergestellt sind. Als Innenmetallteil ist ein stabiles Lagerteil erforderlich, welches üblicher Weise aus metallischem Werkstoff hergestellt ist, es sollen jedoch hier auch andere stabile Werkstoffe gegebenenfalls auch Kunststoffe mit dem Begriff Innenmetallteil umfasst sein.

Mit den Merkmalen des Anspruchs 2 wird erreicht, dass beim Aufbringen einer statischen Last in Richtung des freien Federwegs das Innenmetallteil bezüglich dem Aufnahmeauge in einer betriebsmäßigen Mittellage liegt.

Bei einem besonders bevorzugten Einsatz des elastischen Lagers nach Anspruch 3 ist das Lager am chassisseitigen Lenkerlager einer Einzelradaufhängung an der Vorderachse eines Nutzfahrzeuges verwendet, wobei das Aufnahmeauge mit seiner Längsachse etwa horizontal in Fahrzeuglängsrichtung und die Elastomerschichtschalen in Fahrzeugquerrichtung liegen. Das Lager nimmt hierbei die Kräfte in Fahrzeugquerrichtung auf, die sich aus den Radaufstandskräften sowie den Kräften aus dem Bremsen und überfahren von Hindernissen ergeben. Die Federkonstante ist dabei so dimensionierbar, dass eine Geräuschdämmung erfolgt. In vertikaler Richtung treten hierbei erheblich geringere Kräfte auf, die beim Betrieb des Fahrzeuges zunächst zu einer freien Schwingung führen, wobei die statische Last bei der Herstellung der Elastomermetallbuchse zu berücksichtigen ist. Bei hohen Kräften in Vertikalrichtung, wie sie bei ungewöhnlichen Fahrbedingungen und Extremsituationen auftreten können, werden diese durch elastische Anschläge abgestützt.

Nach Anspruch 4 sind an den Elastomerschichtschalen Außenblechschalen festhaftend angebracht, die im eingepressten Zustand formschlüssig an der Innenwand des Aufnahmeauges anliegen. Es können hierbei Außenblechschalen aus metallischem Material und/oder gegebenenfalls aus Kunststoffmaterial eingesetzt werden, welche nach dem Einpressen formschlüssig anliegen. Diese Außenblechschalen können in einer Ausführungsform nur den zugeordneten Bogenbereich der Elastomerschichtschalen abdecken, so dass der Freiraum zwischen den Elastomerschichtschalen auch von den Außenblechschalen nicht abgedeckt ist und damit gegebenenfalls die Anschlagwand für einen Radialanschlag von der inneren Aufnahmeaugewand gebildet ist. In einer anderen Ausführungsform können die Außenblechschalen am Umfang so weitergeführt sein, dass sie im eingepressten Zustand nahezu eine Ringform bilden und mit Längsspalten aneinandergrenzen, so dass sie gegebenenfalls eine Anschlagwand für einen Radialanschlag bilden.

Zudem können die Elastomerschichtschalen nach Anspruch 5 mehrlagig ausgeführt sein, indem jeweils mindestens eine bevorzugt zwei Zwischenblechschalen eingeformt sind, die mit ihren Randbereichen die Elastomerschichtschalen überragen. Die Außenblechschalen und gegebenenfalls die Zwischenblechschalen führen zu einer Vergleichmäßigung bei der Verdrängung und Belastung des Elastomermaterials und damit zu einer Steigerung der Lebensdauer des elastischen Lagers. Die über die Elastomerschichtschalen überstehenden Randbereiche der Außenblechschalen und gegebenenfalls der Zwischenblechschalen verhindern, dass dort im eingepressten Zustand durch scharfe Blechränder das Elastomermaterial abgeschert oder abgequetscht wird.

Je nach den Einbaugegebenheiten und den betriebsmäßig vorkommenden Beanspruchungen kann es gemäß Anspruch 6 zweckmäßig sein, die ins Aufnahmeauge eingepresste Elastomermetallbuchse gegen ein axiales Auswandern zu sichern. Dies kann auf einfache Weise durch ein Umbördeln eines axial überstehenden Außenblechrandes und/oder überstehender Blechnasen um den stirnseitigen Rand des Aufnahmeauges erfolgen.

In einer Ausführungsform nach Anspruch 7 weisen alle Teile des Lagers über ihren Längsverlauf gleiche Querschnitte auf. Dies ergibt einen einfachen und kostengünstigen Lageraufbau, ohne Probleme beim Einpressen der Elastomermetallbuchse ins Aufnahmeauge. Bei dieser Ausführung können jedoch nur relativ kleine Kräfte in axialer Richtung aufgenommen werden, so dass je nach dem Lagereinsatz und dem Lagereinbau gegebenenfalls axiale elastische Anschläge vorzusehen sind, die beispielsweise in an sich bekannter Weise durch axial aufgesteckte stirnseitige Anschlagringe realisierbar sind.

In einer dazu alternativen Ausführungsform nach Anspruch 8 weisen die radiale Außenfläche des Innenmetallteils, die Elastomerschichtschalen sowie gegebenenfalls Zwischenblechschalen und eine Innenfläche einer Außenblechschale eine doppelkonische Form auf, mit der größten radialen Konuserstreckung in der Lagerlängsmitte. Die radiale Außenfläche der Außenblechschale verläuft dagegen geradlinig durchgehend in Lagerlängsrichtung, um das Einpressen der so ausgebildeten Elastomermetallbuchse in das Aufnahmeauge zu ermöglichen.

In einer ähnlichen alternativen Ausführungsform nach Anspruch 9 sind die radiale Außenfläche des Innenmetallteils, die Elastomerschichtschalen sowie gegebenenfalls Zwischenblechschalen und eine Innenfläche einer Außenblechschale in einem längsmittleren Bereich in Längsrichtung geradlinig durchgehend ausgebildet, wobei sie in den axialen Randbereichen Konusbereiche aufweisen. Auch hier verläuft die radiale Außenfläche der Außenblechschale geradlinig durchgehend in Lagerlängsrichtung um ein ungehindertes Einpressen der Elastomermetallbuchse in das Aufnahmeauge zu gewährleisten.

Bei beiden vorstehenden Ausführungsformen mit Konusbereichen nach den Ansprüchen 8 und 9 steigt die Federkonstante bei Krafteinwirkungen in axialer Richtung progressiv an, so dass hier je nach Lagereinsatz und Lagerbedingungen gegebenenfalls auf axiale Anschläge auch bei großen möglichen axialen Krafteinwirkungen verzichtet werden kann.

Bei beiden vorstehenden Ausführungsformen kann nach Anspruch 10 der Konuswinkel ausgehend von der Quermitte in Umfangsrichtung des Schalenaufbaus abflachend verlaufen, wobei die vorstehende Funktion dennoch ausreichend erhalten bleibt.

Bei den vorstehenden beiden Ausführungsformen mit Konusbereichen kann die beschriebene axiale Abstützfunktion für eine weiter erhöhte Kraftaufnahme weiter nach Anspruch 11 vergrößert werden, indem zu der radialen Vorspannkraft durch Einpressen in das Aufnahmeauge zusätzlich eine axiale Vorspannkraft aufgebracht wird, die am Aufnahmeauge bleibend axial abzustützen ist. Dies kann beispielsweise in an sich bekannter Art durch eine Schulter an einer Stirnseite des Aufnahmeauges in Verbindung mit einem gegenüberliegenden Sicherungsring in einer Nut des Aufnahmeauges erfolgen.

Für die Aufbringung einer großen zusätzlichen axialen Vorspannkraftkomponente kann es nach Anspruch 12 zweckmäßig sein, in den Außenblechschalen und gegebenenfalls in den Zwischenblechschalen in deren Längsmitte einen mittels Stegen überbrückten Querspalt anzubringen. Beim Aufbringen der axialen Vorspannkraft können dann die Stege einfach verformt und die Spaltweiten der Querspalte ohne ein ungünstiges Auffalten und Übereinanderschieben von Blechbereichen verkleinert werden.

Bei der Lagerausführung nach Anspruch 7, aber auch bei den Lagerausführungen nach den Ansprüchen 8 und 9 kann es für die elastische Abstützung hoher axialer Kräfte je nach den Gegebenheiten erforderlich sein, am Lager beidseitig axiale elastische Anschläge vorzusehen. Gemäß Anspruch 13 sind diese an einem separaten U-förmigen Anschlagteil ausgebildet dergestalt, dass die U-Basis des Anschlagteils der Länge des Aufnahmeauges entspricht.

Das Anschlagteil wird so in das Aufnahmeauge eingesetzt, dass die U-Basis an der Innenseite des Aufnahmeauges anliegt und die U-Schenkel die stirnseitigen Randbereiche des Aufnahmeauges nach radial außen umgreifen, wobei an den U-Schenkeln stirnseitig nach axial außen weisende Elastomeranschlagpuffer angebracht sind. Diese Lage des Anschlagteils wird festgehalten und anschließend die Gummimetallbuchse eingepresst, wodurch das Anschlagteil durch die U-Schenkel gegen eine axiale Verschiebung und durch die Gummimetallbuchse in radialer Richtung festgelegt und gehalten ist. Das Anschlagteil kann einfach aus einem Blechstreifen gebogen werden.

Vorteilhaft ist hier das Anschlagteil mit zwei beidseitigen elastischen Anschlägen ein einziges Bauteil, so dass sich gegenüber der bisherigen bekannten Ausführung mit zwei Anschlagscheiben eine Reduzierung der Teilevielfalt ergibt. Zudem ist die Montage und Lagesicherung einfach und kostengünstig durchführbar.

Dazu ist es besonders vorteilhaft, wenn gemäß Anspruch 14 das verwendete Außenblech eine Aussparung und/oder Einbuchtung entsprechend der Materialdicke der U-Basis des Anschlagteils zu deren Aufnahme aufweist, so dass das Außenblech und die U-Basis eine durchgehende Anlagefläche zum Aufnahmeauge hin bilden. Zudem wird durch die Aussparung und/oder Einbuchtung eine weitere Lagesicherung für das Anschlagteil erhalten.

Gemäß Anspruch 15 können je nach den Gegebenheiten ein oder mehrere Anschlagteile gegenüberliegend oder in Umfangsrichtung versetzt angeordnet sein, wobei deren Anschlagpuffer nach einem freien Anschlagweg mit festliegenden Gegenanschlägen zusammenwirken. Beispielsweise können diese Gegenanschläge am Chassis eines Fahrzeugs ausgebildet sein.

Zum Anschluss des Innenmetallteils, beispielsweise am Chassis eines Fahrzeugs, kann dieses nach Anspruch 16 mit beidseitigen Anschlusspratzen und Querbohrungen zur Aufnahme von Anschlussschrauben ausgebildet sein. Alternativ dazu kann nach Anspruch 17 auch eine durch das Innenmetallteil durchgehende Längsbohrung zur Aufnahme eines Schraubenbolzens aufweisen. Beide Anschlussmöglichkeiten führen zu einer stabilen Anbindung des Innenmetallteils als dem zweiten Lageranschluss. Ein Lenker für eine Radaufhängung eines Kraftfahrzeugs kann dabei vorteilhaft mit dem kompletten Lager vormontiert werden, wobei das Lenkerende als Aufnahmeauge ausgebildet ist, in das die Elastomermetallbuchse im Anlieferungszustand zur Fahrzeugfertigmontage bereits eingepresst ist. Für die Fertigmontage am Fahrzeug ist es dann nur erforderlich das Innenmetallteil in der vorstehenden Weise mit dem Chassis zu verbinden.

Anhand einer Zeichnung wird die Erfindung näher erläutert.

Es zeigen:
- Fig. 1: eine Seitenansicht eines elastischen Lagers einer ersten Ausführungsform in Axialrichtung mit einem Axialanschlag im fertigmontierten Zustand mit bereits aufgebrachter statischer Last,
- Fig. 2: einen Längsschnitt durch das Lager nach Fig. 1 entlang der Linie A-A,
- Fig. 3: ein Lager entsprechend Fig. 1 in einer zweiten Ausführungsform,
- Fig. 4: einen Längsschnitt durch das Lager nach Fig. 3 entlang der Linie A-A,
- Fig. 5: ein elastisches Lager entsprechend Fig. 1 in einer dritten Ausführungsform,
- Fig. 6: einen Längsschnitt durch das Lager nach Fig. 5 entlang der Linie A-A, und
- Fig. 7: eine Darstellung des Lagers nach Fig. 1 bei noch nicht aufgebrachter statischer Last.

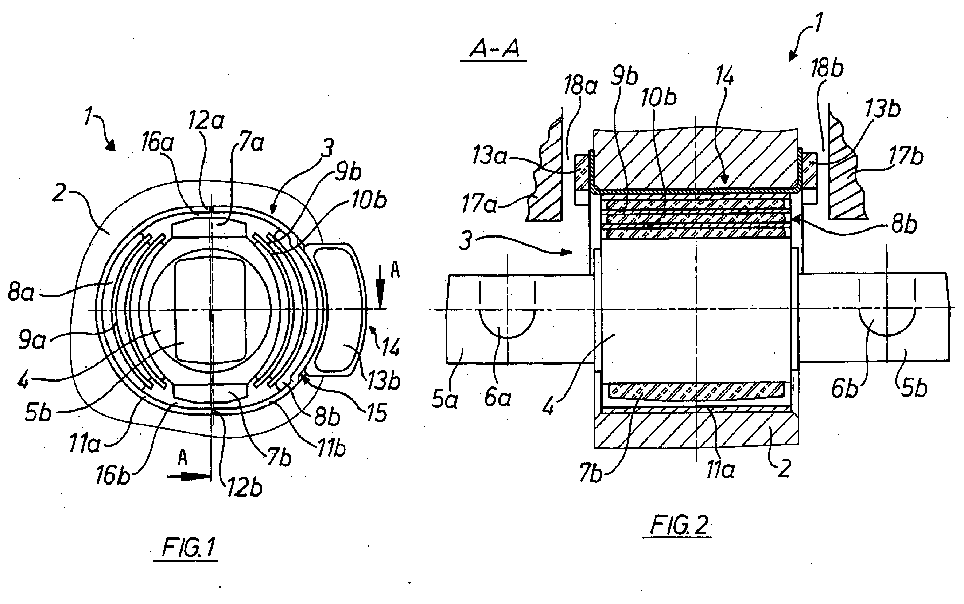

In den Fig. 1 und 2 ist ein elastisches Lager 1 einer ersten Ausführungsform dargestellt, mit einem Aufnahmeauge 2 als erstem Lageranschluss und einer darin eingepressten Elastomermetallbuchse 3.

Die Elastomermetallbuchse 3 besteht aus einem Innenmetallteil 4, welches beidseitig Anschlusspratzen 5a, 5b aufweist, mit Querbohrungen 6a, 6b zur Aufnahme von Anschlussschrauben. Das Innenmetallteil 4 hat im Lagerinnenbereich etwa eine Ellipsenform, wobei die lange Ellipsenachse etwa vertikal ausgerichtet ist. Dabei ist der obere und untere Ellipsenbogen zu etwa horizontal ausgerichteten Anschlussflächen abgeflacht, an denen ein oberer und unterer elastischer Radialanschlag 7a, 7b festhaftend angebracht ist.

In Querrichtung schließen sich am Innenmetallteil an deren großen beidseitigen Ellipsenbögen Elastomerschichtschalen 8a, 8b an, die jeweils durch zwei eingebrachte und beabstandete Zwischenblechschalen 9a, 9b und 10a und 10b dreilagig aufgebaut sind, die Zwischenblechschalen überragen mit Randbereichen die Elastomerschichtschalen 8a, 8b.

An den Elastomerschichtschalen 8a, 8b sind zudem Außenblechschalen 11a, 11b festhaftend angebracht, die hier im eingepressten Zustand eine Ringform bilden und an Längsspalten 12a, 12b aneinandergrenzen. Im Bereich der Radialanschläge 7a, 7b bilden damit die Innenseiten der Außenblechschalen 11a, 11b, die festen Anschlagwände für die Radialanschläge 7a, 7b.

Zudem sind an der rechten Lagerseite zwei gegenüberliegende elastische Axialanschläge 13a, 13b vorgesehen, die mittels eines separat aus einem Blechstreifen gebogenen U-förmigen Anschlagteil 14 hergestellt sind. Die U-Basis des Anschlagteils entspricht der Länge des Aufnahmeauges 2 und liegt als flaches Blechteil in einer der Materialdicke entsprechenden Einbuchtung 15 der zugeordneten Außenblechschale 11b. Die U-Schenkel umgreifen die stirnseitigen Randbereiche des Aufnahmeauges 2, wobei an den U-Schenkeln axial nach außen weisende Elastomerpuffer als Axialanschläge 13a, 13b festhaftend angebracht sind.

Das gezeigte elastische Lager 1 ist als chassisseitiges Lenkerlager einer Einzelradaufhängung an der Vorderachse eines Nutzfahrzeuges eingesetzt, wobei das Aufnahmeauge 2 mit seiner Längsachse in Fahrzeuglängsrichtung ausgerichtet ist und die Elastomerschichtschalen 8a, 8b in Fahrzeugquerrichtung liegen. In Fahrzeugquerrichtung eingeleitete, relativ große Kräfte werden molekular in den Elastomerschichtschalen aufgenommen und elastisch abgestützt. Die in vertikaler Richtung betriebsmäßig auftretenden, normalerweise relativ kleineren Kräfte führen zu Vertikalschwingungen, wozu zwischen den Radialanschlägen 7a, 7b und den gegenüberliegenden Bereichen der Außenblechschalen 11 a, 11 b jeweils ein freier Federweg 16a, 16b zur Verfügung steht. Nach Überwindung eines dieser freien Federwege 16a oder 16b erfolgt bei großen Krafteinwirkungen eine elastische Lagerabstützung über die Radialanschläge 7a bzw. 7b.

Da hier das Aufnahmeauge im Querschnitt ellipsenförmig ausgebildet ist, erfolgt durch diese Formgebung bereits eine Verdrehsicherung der darin eingepressten Elastomermetallbuchse. Es kann bei Bedarf zu Erhöhung des Reibschlusses zwischen den Außenblechschalen 11a, 11b und der Innenseite des Aufnahmeauges 2 auf den Außenblechschalen 11 a, 11b ein (nicht dargestellter) dünner Gummifilm aufgebracht werden, wie dies zur Verdrehsicherung bei kreisrunden Zylinderformen von Aufnahmeaugen bekannt ist.

Bei einer axialen Auslenkung des Aufnahmeauges 2 (sh. Fig. 2) steht zwischen Chassisseitig fest angebrachten Gegenanschlägen 17a, 17b zu beiden Seiten ein freier Federweg 18a, 18b zur Verfügung, wonach eine elastische Abstützung über die Axialanschläge 13a, 13b erfolgt.

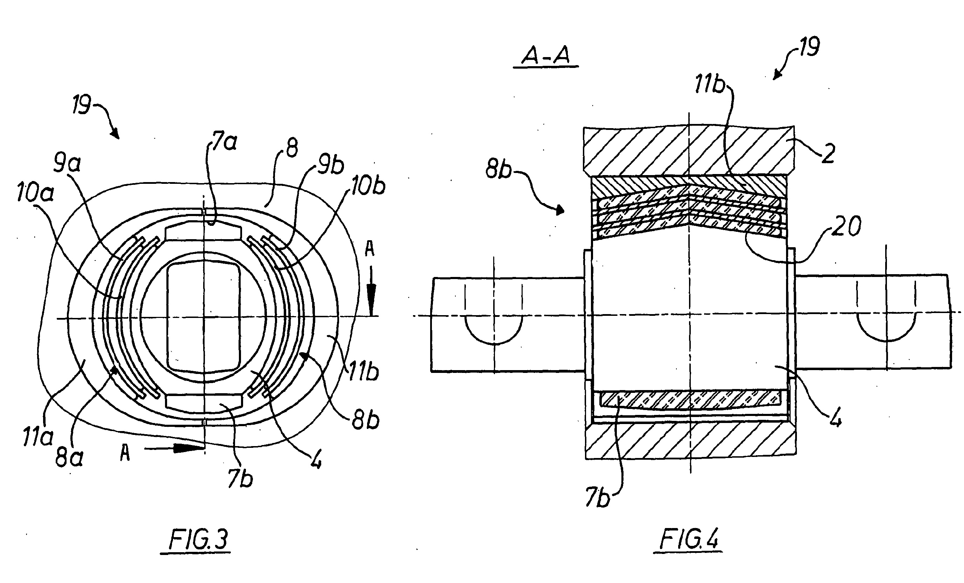

In den Fig. 3 und 4 ist eine zweite Ausführungsform eines elastischen Lagers 19 dargestellt, das weitgehend der Ausführungsform des elastischen Lagers 1 nach den Fig. 1 und 2 entspricht. Es werden daher für Gleichteile gleiche Bezugszeichen verwendet und nur die Unterschiede erläutert. Auch das elastische Lager 19 weist ein Aufnahmeauge 2 und ein Innenmetallteil 4 jeweils mit elliptischem Querschnitt auf, wobei zudem am Innenmetallteil 4 elastische Radialanschläge 7a, 7b angebracht sind. Während aber bei dem elastischen Lager 1 nach den Fig. 1 und 2 alle Lagerteile in Lagerlängsrichtung mit gleichem Querschnitt ausgeführt sind, liegt im elastischen Lager 19 an der radialen Außenfläche 20 des Innenmetallteils 4 im Bereich der Elastomerschichtschalen 8a, 8b und der Zwischenblechschalen 9a, 9b und 10a und 10b eine Doppelkonusform vor, mit der größten radialen Konuserstreckung in der Längsmitte des Aufnahmeauges 2. Entsprechend ist die Innenfläche der Außenblechschalen 11a, 11b konisch geformt, während die radialen Außenflächen der Außenblechschalen 11a, 11b geradlinig durchgehend in Längsrichtung verlaufen. Zur einfachen Realisierung dieser Form können hier als Außenblechschalen jeweils Kunststoffformteile eingesetzt werden.

Durch die Doppelkonusform ergibt sich in den Elastomerschichtschalen 8a, 8b eine elastische Abstützkomponente in den beiden Axialrichtungen mit ansteigender Federkennung, so dass je nach dem Lagereinsatz und den speziellen Lagerbedingungen gegebenenfalls auf Axialanschläge 13a, 13b, wie sie in den Fig. 1 und 2 dargestellt sind, verzichtet werden kann.

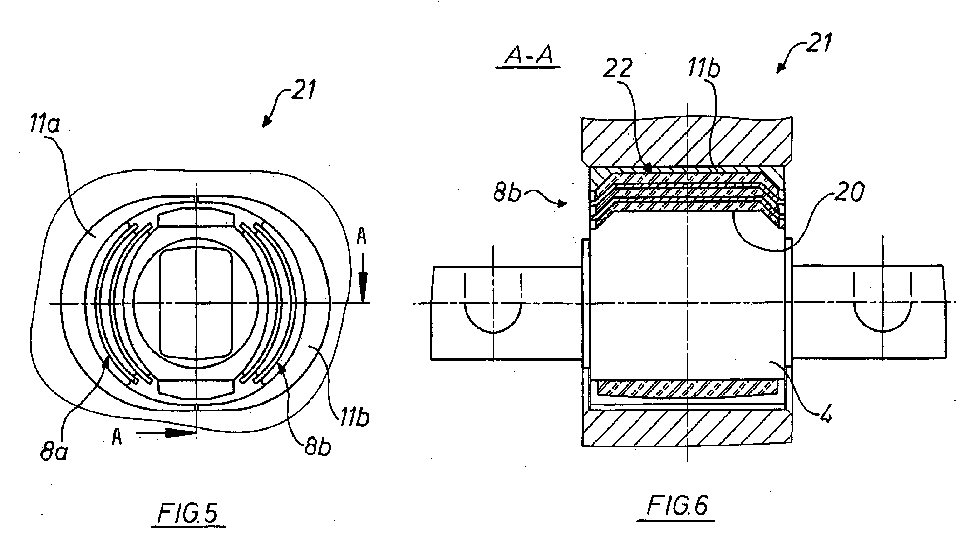

In den Fig. 5 und 6 ist eine dritte Ausführungsform eines elastischen Lagers 21 dargestellt, die weitgehend mit der zweiten Ausführungsform nach den Fig. 3 und 4 übereinstimmt, so dass hier nur die Unterschiede dazu herausgestellt werden. Auch bei dem elastischen Lager 21 ist an der entsprechenden radialen Außenfläche 20 des Innenmetallteils 4 sowie an den mehrlagigen Elastomerschichtschalen 8a, 8b und der Innenfläche der Außenblechschalen 11a, 11b eine Doppelkonusform ausgebildet, die jedoch in der Lagerlängsmitte hier durch einen längsmittleren Bereich 22 verbunden ist, der in Längsrichtung geradlinig durchgehend verläuft. Die in Verbindung mit der zweiten Ausführungsform des elastischen Lagers 19 angegebenen Funktionen treten auch hier auf.

Je nach den Anforderungen an das Lager und für Dimensionierungszwecke kann aus den angegebenen drei Ausführungsformen die zweckmäßigste Lösung ausgewählt werden kann.

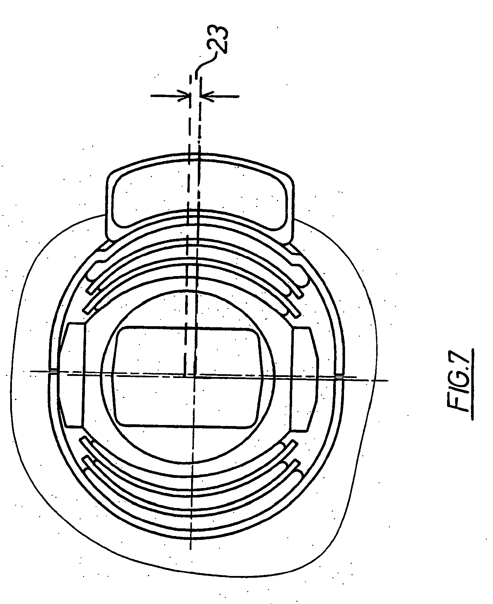

In allen Lagerdarstellungen der Fig. 1 bis 6 ist bereits beim Einbau in ein Fahrzeug eine statische Last aufgebracht, wobei das Aufnahmeauge und das Innenmetallteil zueinander die dargestellte Mittellage aufweisen. Zur Verdeutlichung ist in Fig. 7 noch das Lager nach Fig. 1 ohne aufgebrachter statischer Last gezeigt, wobei die vorstehende Mittellage und die erforderlichen Federwege erst nach Aufbringen der statischen Last und einer Einsenkung 23 vorliegen.

## Patentansprüche

1. Elastisches Lager mit einer Elastomermetallbuchse für ein Kraftfahrzeug
mit einem Aufnahmeauge (2) als erstem Lageranschluss,
mit einer Elastomermetallbuchse (3) bestehend aus einem Innenmetallteil (4) als zweitem Lageranschluss mit darauf festhaftend durch jeweils radial gegenüberliegende Freiräume unterbrochen Elastomerschichtschalen (8a, 8b), wobei der Außendurchmesser der Elastomermetallbuchse (3) im Herstellzustand zumindest an den Elastomerschichtbereichen ein Übermaß gegenüber dem zugeordneten Innendurchmesser des Aufnahmeauges (2) aufweist und die Elastomermetallbuchse (3) im montierten Zustand unter Vorspannung in den Elastomerschichtschalen (8a, 8b) ins Aufnahmeauge (2) eingepresst ist, und das Aufnahmeauge (2) im Querschnitt etwa eine Ellipsenform aufweist, wobei die Elastomerschichtschalen (8a, 8b) jeweils im Bereich der engeren Ellipsenbögen entsprechend der Richtung der langen Ellipsenachse angeordnet sind und die dazwischenliegenden Freiräume jeweils im Bereich der flachen Ellipsenbögen entsprechend der Richtung der kurzen Ellipsenachse liegen,
**dadurch gekennzeichnet,**
**dass** das Innenmetallteil (4) im Querschnitt etwa eine Innenmetallteil-Ellipsenform aufweist, wobei hier die lange Ellipsenachse etwa im rechten Winkel zur langen Ellipsenachse der Aufnahmeauge-Ellipsenform liegt,
**dass** die engeren Ellipsenbögen der Aufnahmeauge-Ellipsenform enger sind als die jeweils radial gegenüberliegenden flachen Ellipsenbögen der Innenmetallteil-Ellipsenform, und
**dass** die engeren Ellipsenbögen der Innenmetallteil-Ellipsenform im Bereich der Freiräume zwischen den Elastomerschichtschalen (8a, 8b) abgeflacht sind und dort elastische Radialanschläge (7a, 7b) angebracht sind.

2. Elastisches Lager nach Anspruch 1, **dadurch gekennzeichnet, dass** die Elastomermetallbuchse (3) so hergestellt ist, dass die Längsachsen des Innenmetallteils (4), der Elastomerschichtschalen (8a, 8b), gegebenenfalls von Zwischenblechschalen (9a, 9b) und von Außenblechschalen (11a, 11 b) in Richtung der kurzen Ellipsenachse der Aufnahmeauge-Ellipsenform so versetzt liegen, dass nach Aufbringen einer statischen Last entgegen der Richtung des Achsversatzes alle Längsachsen einschließlich der Längsachse des Aufnahmeauges (2) zusammenfallen.

3. Elastisches Lager nach Anspruch 1 oder 2, **dadurch gekennzeichnet, dass** das Lager ein chassisseitiges Lenkerlager eines Lenkers einer Einzelradaufhängung an der Vorderachse eines Nutzfahrzeugs ist und das Aufnahmeauge (2) mit seiner Längsachse in Fahrzeuglängsrichtung und die Elastomerschichtschalen (8a, 8b) in Fahrzeugquerrichtung liegen.

4. Elastisches Lager nach einem der Ansprüche 1 bis 3, **dadurch gekennzeichnet, dass** an den Elastomerschichtschalen (8a, 8b) Außenblechschalen (11a, 11b) festhaftend angebracht sind, die im eingepressten Zustand formschlüssig an der Innenwand des Aufnahmeauges (2) anliegen, wobei sie entweder nur den zugeordneten Bogenbereich der Elastomerschichtschalen (8a, 8b) abdecken oder am Umfang weitergeführt sind und mit Längsspalten (12a, 12b) aneinandergrenzen.

5. Elastisches Lager nach einem der Ansprüche 1 bis 4, **dadurch gekennzeichnet, dass** die Elastomerschichtschalen (8a, 8b) mehrlagig ausgeführt sind, indem jeweils mindestens eine bevorzugt zwei Zwischenblechschalen (9a, 9b, 10a, 10b) eingeformt sind, die mit ihren Randbereichen die Elastomerschichtschalen (8a, 8b) überragen.

6. Elastisches Lager nach einem der Ansprüche 1 bis 5, **dadurch gekennzeichnet, dass** für eine axiale Lagesicherung der Elastomermetallbuchse (3) im Aufnahmeauge (2) ein festhaftend mit den Elastomerschichtschalen (8a, 8b) verbundene Außenblechschale (11a, 11 b) mit axialen Überständen um den stirnseitigen Rand des Aufnahmeauges (2) gebördelt ist.

7. Elastisches Lager nach einem der Ansprüche 1 bis 6, **dadurch gekennzeichnet, dass** alle Teile des Lagers im Lagerlängsverlauf gleiche Querschnitte aufweisen (Fig. 1, 2).

8. Elastisches Lager nach einem der Ansprüche 1 bis 6, **dadurch gekennzeichnet, dass** die radialen Außenflächen des Innenmetallteils (4), die Elastomerschichtschalen (8a, 8b) sowie gegebenenfalls Zwischenblechschalen (9a, 9b, 10a, 10b) und die Innenflächen der Außenblechschalen (11a, 11 b) eine doppelkonische Form mit der größten radialen Konuserstreckung in der Lagerlängsmitte aufweisen und die radialen Außenflächen der Außenblechschalen (11a, 11b) in Lagerlängsrichtung geradlinig durchgehend verlaufen (Fig. 3, 4).

9. Elastisches Lager nach einem der Ansprüche 1 bis 6, **dadurch gekennzeichnet, dass** die radialen Außenflächen des Innenmetallteils (4), die Elastomerschichtschalen (8a, 8b) sowie gegebenenfalls Zwischenblechschalen (9a, 9b, 10a, 10b) und die Innenflächen der Außenblechschalen (11a, 11 b) in einem längsmittleren Bereich (22) in Längsrichtung geradlinig durchgehend ausgebildet sind und in den axialen Randbereichen Konusbereiche aufweisen, wobei die radialen Außenflächen der Außenblechschalen (11 a, 11 b) in Lagerlängsrichtung geradlinig durchgehend verlaufen (Fig. 5, 6).

10. Elastisches Lager nach Anspruch 8 oder Anspruch 9, **dadurch gekennzeichnet, dass** der Konuswinkel ausgehend von der Quermitte in Umfangsrichtung des Schalenaufbaus abflachend verläuft.

11. Elastisches Lager nach einem der Ansprüche 8 bis 10, **dadurch gekennzeichnet, dass** zusätzlich zu einer radialen Vorspannkraftkomponente eine axiale Vorspannkraftkomponente aufgebracht ist, die am Aufnahmeauge (2) axial abgestützt ist.

12. Elastisches Lager nach Anspruch 11, **dadurch gekennzeichnet, dass** in Außenblechen und gegebenenfalls in Zwischenblechen in deren Längsmitte ein mittels Stegen überbrückter Querspalt angebracht ist.

13. Elastisches Lager nach einem der Ansprüche 1 bis 12, **dadurch gekennzeichnet, dass** am Lager beidseitig elastische Axialanschläge (13a, 13b) vorgesehen sind, die an einem separaten U-förmigen Anschlagteil (14) ausgebildet sind, dergestalt, dass die U-Basis des Anschlagteils (14) der Länge des Aufnahmeauges (2) entspricht und das Anschlagteil (14) so eingesetzt wird, dass die U-Basis an der Innenseite des Aufnahmeauges (2) anliegt und die U-Schenkel mit nach axial außen weisenden Elastomeranschlagpuffern die stirnseitigen Randbereiche des Aufnahmeauges (2) nach radial außen umgreifen, wonach die Elastomermetallbuchse (3) für eine radiale Festlegung des Anschlagteils (14) eingepresst wird.

14. Elastisches Lager nach Anspruch 13, **dadurch gekennzeichnet, dass** wenigstens eine Außenblechschale (11a, 11b) eine Aussparung und/oder Einbuchtung (15) entsprechend der Materialdicke der U-Basis des Anschlagteils (14) zu deren Aufnahme aufweist.

15. Elastisches Lager nach Anspruch 13 oder 14, **dadurch gekennzeichnet, dass** ein oder mehrere Anschlagteile (14) in Umfangsrichtung versetzt angeordnet sind, deren Axialanschläge (13a, 13b) über einen freien Anschlagweg mit festen Gegenschlägen (17a, 17b) zusammenwirken.

16. Elastisches Lager nach einem der Ansprüche 1 bis 15, **dadurch gekennzeichnet, dass** das Innenmetallteil (4) beidseitig Anschlusspratzen (5a, 5b) mit Querbohrungen (6a, 6b) zur Aufnahme von Anschlussschrauben aufweist.

17. Elastisches Lager nach einem der Ansprüche 1 bis 15, **dadurch gekennzeichnet, dass** das Innenmetallteil (4) eine durchgehende Längsbohrung zur Aufnahme eines Schraubenbolzens aufweist.

## Claims

1. Elastic bearing with an elastomeric metallic bush for a motor vehicle
with a receiving eye (2) as a first bearing connection,
with an elastomeric metallic bush (3), comprising an inner metal part (4), as a second bearing connection, with elastomer layer shells (8a, 8b) securely adhering thereto and interrupted by clearances respectively lying radially opposite one another, the outer diameter of the elastomeric metallic bush (3) in the manufactured state being oversized in comparison with the assigned inner diameter of the receiving eye (2), at least in the regions of the elastomer layers, and the elastomeric metallic bush (3) in the mounted state being pressed into the receiving eye (2) while the elastomer layer shells (8a, 8b) are under prestresses, and the receiving eye (2) having an approximately elliptical shape in cross section, the elastomer layer shells (8a, 8b) being respectively arranged in the region of the narrower arcs of the ellipse in accordance with the direction of the major axis of the ellipse and the clearances that lie in between respectively lying in the region of the flat arcs of the ellipse in accordance with the direction of the minor axis of the ellipse,
**characterized**
**in that** the inner metal part (4) has an approximately elliptical inner metal part shape in cross section, the major axis of the ellipse lying here approximately at right angles to the major axis of the ellipse of the elliptical receiving eye shape,
**in that** the narrower arcs of the ellipse of the elliptical receiving eye shape are narrower than the flat arcs of the ellipse of the elliptical inner metal part shape respectively lying radially opposite one another, and
**in that** the narrower arcs of the ellipse of the elliptical inner metal part shape are flattened in the region of the clearances between the elastomer layer shells (8a, 8b) and elastic radial stops (7a, 7b) are provided there.

2. Elastic bearing according to Claim 1, **characterized**
**in that** the elastomeric metallic bush (3) is manufactured in such a way that the longitudinal axes of the inner metal part (4), of the elastomer layer shells (8a, 8b), optionally of intermediate sheet-metal shells (9a, 9b) and of outer sheet-metal shells (11a, 11b) are offset in the direction of the minor axis of the ellipse of the elliptical receiving eye shape in such a way that, after a static load is applied counter to the direction of the axial offset, all the longitudinal axes including the longitudinal axis of the receiving eye (2) coincide.

3. Elastic bearing according to Claim 1 or 2, **characterized in that** the bearing is a chassis-side strut bearing of a strut of a single wheel suspension on the front axle of a commercial vehicle and the receiving eye (2) lies with its longitudinal axis in the longitudinal direction of the vehicle and the elastomer layer shells (8a, 8b) lie in the transverse direction of the vehicle.

4. Elastic bearing according to one of Claims 1 to 3, **characterized in that** outer sheet-metal shells (11a, 11b) are attached in a securely adhering manner to the elastomer layer shells (8a, 8b) and in the pressed-in state lie with a form fit against the inner wall of the receiving eye (2), either covering only the assigned arc region of the elastomer layer shells (8a, 8b) or being taken further around the circumference and lying adjacent to one another with longitudinal gaps (12a, 12b).

5. Elastic bearing according to one of Claims 1 to 4, **characterized in that** the elastomer layer shells (8a, 8b) are of a multilayered configuration, **in that** in each case at least one, preferably two, intermediate sheet-metal shells (9a, 9b, 10a, 10b) which protrude with their peripheral regions beyond the elastomer layer shells (8a, 8b) are incorporated.

6. Elastic bearing according to one of Claims 1 to 5, **characterized in that,** for axially securing the elastomeric metallic bush (3) in position in the receiving eye (2), an outer sheet-metal shell (11a, 11b) which is connected in a securely adhering manner to the elastomer shell layers (8a, 8b) and has axial projections is flanged around the end periphery of the receiving eye (2).

7. Elastic bearing according to one of Claims 1 to 6, **characterized in that** all the parts of the bearing have the same cross sections in the longitudinal extent of the bearing (Figures 1 and 2).

8. Elastic bearing according to one of Claims 1 to 6, **characterized in that** the radial outer surfaces of the inner metal part (4), the elastomer layer shells (8a, 8b) and optionally intermediate sheet-metal shells (9a, 9b, 10a, 10b) and the inner surfaces of the outer sheet-metal shells (11a, 11b) have a double-cone shape, with the greatest radial extent of the cone in the centre of the axis of the bearing, and the radial outer surfaces of the outer sheet-metal shells (11a, 11b) run in a continuous straight line in the longitudinal direction of the bearing (Figures 3 and 4).

9. Elastic bearing according to one of Claims 1 to 6, **characterized in that** the radial outer surfaces of the inner metal part (4), the elastomer layer shells (8a, 8b) and optionally intermediate sheet-metal shells (9a, 9b, 10a, 10b) and the inner surfaces of the outer sheet-metal shells (11a, 11b) are formed in a longitudinally central region (22) in a continuous straight line in the longitudinal direction and have cone regions in the axial peripheral regions, the radial outer surfaces of the outer sheet-metal shells (11a, 11b) running in a continuous straight line in the longitudinal direction of the bearing (Figures 5 and 6).

10. Elastic bearing according to Claim 8 or Claim 9, **characterized in that,** proceeding from the transverse centre, the cone angle runs in a flattened manner in the circumferential direction of the shell structure.

11. Elastic bearing according to one of Claims 8 to 10, **characterized in that,** in addition to a radial prestressing force component, an axial prestressing force component, which is axially supported on the receiving eye (2), is applied.

12. Elastic bearing according to Claim 11,
**characterized in that** a transverse gap bridged by means of webs is provided in outer metal sheets and optionally intermediate metal sheets, in the longitudinal centre thereof.

13. Elastic bearing according to one of Claims 1 to 12, **characterized in that** elastic axial stops (13a, 13b) are provided on both sides on the bearing and are formed on a separate U-shaped stop part (14) in such a way that the U base of the stop part (14) corresponds to the length of the receiving eye (2) and the stop part (14) is inserted in such a way that the U base lies against the inner side of the receiving eye (2) and the U legs grip radially outwardly around the end peripheral regions of the receiving eye (2) with axially outwardly printing elastomer stop buffers, whereby the elastomeric metallic bush (3) is pressed in for radial fixing of the stop part (14).

14. Elastic bearing according to Claim 13,
**characterized in that** at least one outer sheet-metal shell (11a, 11b) has a cutout and/or indentation (15) in accordance with the material thickness of the U base of the stop part (14) for receiving the latter.

15. Elastic bearing according to Claim 13 or 14, **characterized in that** one or more stop parts (14) are arranged offset in the circumferential direction, the axial stops (13a, 13b) of which interact over a free stop path with fixed counter stops (17a, 17b).

16. Elastic bearing according to one of Claims 1 to 15, **characterized in that** the inner sheet-metal part (4) has on both sides stop claws (5a, 5b) with transverse bores (6a, 6b) for receiving stop screws.

17. Elastic bearing according to one of Claims 1 to 15, **characterized in that** the inner metal part (4) has a continuous longitudinal bore for receiving a screw bolt.

## Revendications

1. Support élastique avec un manchon élastomère/métal pour un véhicule,
comportant un orifice de réception (2) comme premier raccord de support,
doté d'un manchon êlastomère/métal (3) constitué d'une partie métallique interne (4) comme deuxième raccordement de support comportant, fixe sur celui-ci par des espaces libres opposés radialement, des coques de couches d'élastomère discontinues (8a, 8b), le diamètre externe du manchon élastomère/métal (3) à l'état de fabrication présentant au moins au niveau des zones de couches d'élastomère, un dépassement par rapport au diamètre interne de l'orifice de réception (2) et le manchon élastomère/métal (3) étant emmanché à l'état monté sous la précontrainte des coques de couches élastomère (8a, 8b) dans l'orifice de réception, et l'orifice de réception (2) présentant en section transversale, à peu près une forme d'ellipse, les coques de couches élastomères (8a, 8b) étant disposées respectivement dans la zone de l'arc d'ellipse le plus étroit correspondant à la direction de l'axe d'ellipse long et les espaces libres situés entre ceux-ci étant respectivement dans la zone de l'arc d'ellipse plat correspondant à la direction de l'axe d'ellipse court,
**caractérisé en ce que**
la partie métallique interne (4) présente en section transversale, à peu près une forme d'ellipse de la partie métallique interne, l'axe d'ellipse long étant ici à peu près à angle droit par rapport à l'axe d'ellipse long de la forme d'ellipse de l'orifice de réception,
les arcs d'ellipses plus étroits de la forme d'ellipse de l'orifice de réception étant plus étroits que les arcs d'ellipse plats respectifs, radialement opposés, de la forme d'ellipse de la partie métallique interne, et
les arcs d'ellipse plus étroits de la forme d'ellipse de la partie métallique interne étant aplatis dans la zone des espaces libres entre les coques de couches d'élastomère (8a, 8b) et à ce niveau, des butées radiales élastiques (7a, 7b) étant fixées.

2. Support élastique selon la revendication 1, **caractérisé en ce que** le manchon élastomère/métal (3) est fabriqué de telle sorte que les axes longitudinaux de la partie métallique interne (4) sont décalés des coques de couches élastomères (8a, 8b) éventuellement des coques en tôles intermédiaires (9a, 9b) et des coques en tôle externes (11a, 11b) dans le sens de l'axe d'ellipse court de la forme d'ellipse de l'orifice de réception de telle sorte qu'après application d'une charge statique opposée à la direction du décalage d'axe, tous les axes longitudinaux y compris l'axe longitudinal de l'orifice de réception (2) coïncident.

3. Support élastique selon la revendication 1 ou 2, **caractérisé en ce que** le support est un support de bielle de châssis d'une bielle d'une suspension à roues indépendantes de l'essieu avant d'un véhicule utilitaire et l'orifice de réception (2) se trouve avec son axe longitudinal dans le sens longitudinal du véhicule et les coques de couches élastomères (8a, 8b) se trouvent dans le sens perpendiculaire au véhicule.

4. Support élastique selon l'une des revendications 1 à 3, **caractérisé en ce que,** sur les coques de couches élastomères (8a, 8b) sont appliquées fixement des coques de tôle externes (11a, 11b) qui se trouvent à l'état emmanché, solidaires de la paroi interne de l'orifice de réception (2), où elles recouvrent soit uniquement la zone d'arc des coques de couches élastomères (8a, 8b), soit sont maintenues sur le pourtour et sont contiguës des fentes longitudinales (12a, 12b).

5. Support élastique selon l'une des revendications 1 à 4, **caractérisé en ce que** les coques des couches élastomères (8a, 8b) sont réalisées en plusieurs couches, et **en ce que** respectivement au moins l'une, de préférence deux coques de tôle intermédiaires (9a, 9b, 10a, 10b) sont prévues, qui dépassent des coques de couches élastomères (8a, 8b) avec leur zone périphérique.

6. Support élastique selon l'une des revendications 1 à 5, **caractérisé en ce que** pour une fixation axiale du manchon élastomère/métal (3) dans l'orifice de réception (2), une coque de tôle externe (11a, 11b) liée solidement aux coques de couches élastomères (8a, 8b) est bordée de proéminences axiales autour du bord frontal de l'orifice de réception (2).

7. Support élastique selon l'une des revendications 1 à 6, **caractérisé en ce que** toutes les pièces du support présentent dans le sens longitudinal du support, des sections égales (figure 1, 2).

8. Support élastique selon l'une des revendications 1 à 6, **caractérisé en ce que** les surfaces externes radiales de la partie métallique interne (4), les coques de couches élastomères (8a, 8b) et éventuellement les coques de tôles intermédiaires (9a, 9b, 10a, 10b) et les surfaces internes des coques de tôle externe (11a, 11b) présentent une forme conique double avec l'extension du cône radial la plus grande au milieu longitudinal du support et les surfaces externes radiales des coques de tôle externe (11a, 11b) évoluent en continu de façon rectiligne dans le sens longitudinal du support.

9. Support élastique selon l'une des revendications 1 à 6, **caractérisé en ce que** les surfaces externes radiales de la partie métallique interne (4), les coques de couches élastomères (8a, 8b) et éventuellement les coques de tôle intermédiaire (9a, 9b, 10a, 10b) et les surfaces internes des coques de tôle intermédiaires (11a, 11b) sont formées dans une zone médiane longitudinale (22) en continu de façon rectiligne dans le sens longitudinal et présentent dans les zones périphériques axiales, des zones coniques, les surfaces externes radiales des coques de tôle externes (11a, 11b) évoluant en continu de façon rectiligne dans le sens longitudinal du support (figure 5, 6).

10. Support élastique selon la revendication 8 ou la revendication 9, **caractérisé en ce que** l'angle de cône à partir du milieu perpendiculaire évolue en s'aplatissant dans le sens du pourtour de la structure en coque.

11. Support élastique selon l'une des revendications 8 10, **caractérisé en ce que** en plus d'un composant de précontrainte radiale, est appliqué un composant de précontrainte axiale qui s'appuie axialement sur l'orifice de réception (2).

12. Support élastique selon la revendication 11, **caractérisé en ce que** dans les tôles externes et éventuellement dans les tôles intermédiaires est prévue dans leur milieu longitudinal, une fente longitudinale étayée par des tiges.

13. Support élastique selon l'une des revendications 1 à 12, **caractérisé en ce que** sont prévus sur le support, des deux côtés, des butées axiales élastiques (13a, 13b) qui sont conçues au niveau d'une partie de butée (14) en forme de U séparée, de telle sorte que la base en U de la partie de butée (14) corresponde à la longueur de l'orifice de réception (2) et que la partie de butée (14) soit ajustée de telle sorte que la base en U repose à l'intérieur de l'orifice de réception (2) et que les bras en U comprennent avec des tampons de butée élastomères dirigés vers l'extérieur axialement, les zones périphériques frontales de l'orifice de réception (2) vers l'extérieur, radialement, de telle sorte que le manchon élastomère/métal (3) est emmanché pour une fixation radiale de la partie de butée (14).

14. Support élastique selon la revendication 13, **caractérisé en ce que** au moins une coque de tôle externe (11a, 11b) présente un évidement et/ou une encoche (15) correspondant à l'épaisseur de matériau de la base en U de la partie de butée (14) pour sa réception.

15. Support élastique selon la revendication 13 ou 14, **caractérisé en ce qu'**une ou plusieurs parties de butée (14) sont disposées de façon décalée dans le sens périphérique, dont les butées axiales (13a, 13b) coopèrent sur un chemin de butée libre avec des contrebutées fixes (17a, 17b).

16. Support élastique selon l'une des revendications 1 à 15, **caractérisé en ce que** la partie métallique interne (4) présente des deux côtés, des moyens de raccordement (5a, 5b) avec des alésages perpendiculaires (6a, 6b) pour la réception de vis de raccordement.

17. Support élastique selon l'une des revendications 1 à 15, **caractérisé en ce que** la partie métallique interne (4) présente un alésage longitudinal continu pour la réception d'un boulon fileté.
